# EUROPEAN PATENT SPECIFICATION

(11) **EP 3 656 985 B1**
(45) Date of publication and mention of the grant of the patent: **01.01.2025**
(21) Application number: 19210456.0
(22) Date of filing: 20.11.2019
(51) Int. Cl.: F01D 9/02, F01D 11/00

(54) **COMBUSTOR-VANE INTERFACE FEATHER SEAL**
FEDERDICHTUNG FÜR BRENNKAMMER-SCHAUFEL-SCHNITTSTELLE
JOINT À LANGUETTE POUR L'INTERFACE ENTRE AUBES ET CHAMBRE DE COMBUSTION

(30) Priority: 20.11.2018 US 201816195925
(43) Date of publication of application: 27.05.2020
(73) Proprietor: RTX Corporation, Farmington, CT 06032 (US)
(72) Inventor: PROPHETER-HINCKLEY, Tracy A., Rocky Hill, CT Connecticut 06067 (US); PORTER, Steven D., Wethersfield, CT Connecticut 06109 (US); KARANIAN, Caroline, West Hartford, CT Connecticut 06119 (US)
(74) Representative: Dehns

(56) References cited:
- EP-A1- 2 660 428
- EP-A1- 3 372 792
- WO-A1-00/12870
- US-A- 4 465 284
- US-A1- 2016 222 812
- US-A1- 2018 016 927

## Description

### TECHNICAL FIELD

The present invention relates to a gas turbine engine.

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The high pressure turbine drives the high pressure compressor through an outer shaft to form a high spool, and the low pressure turbine drives the low pressure compressor through an inner shaft to form a low spool. The fan section may also be driven by the low inner shaft. A direct drive gas turbine engine includes a fan section driven by the low spool such that the low pressure compressor, low pressure turbine and fan section rotate at a common speed in a common direction.

EP 3 372 792 A1 discloses a prior art gas turbine transition piece seal system.

EP 2 660 428 A1 discloses a prior art turbine system comprising a transition duct with a flexible seal.

WO 00/12870 A1 discloses a prior art C-shaped seal ring.

US 4 465 284 A discloses prior art scalloped cooling of gas turbine transition piece frame.

### SUMMARY

In accordance with a first aspect of the present invention, there is provided a gas turbine engine as claimed in claim 1.

In an embodiment of the foregoing embodiment, the platform is radially inwards of the airfoil section.

In a further embodiment of any of the foregoing embodiments, the lip of the combustor abuts the leading edge of the platform.

In a further embodiment of any of the foregoing embodiments, the radially outer wall of the first annular slot and the radially outer wall of the second annular slot abut, and the radially inner wall of the first annular slot and the radially inner wall of the second slot are axially spaced apart such that there is a gap therebetween.

In a further embodiment of any of the foregoing embodiments, the airfoil section of each vane extends along a radial axis from the platform. Each vane has rotational play about the respective radial axis under aerodynamic loads such that each vane moves relative to the combustor between a seated state in which the forward edge abuts the lip of the combustor wall and an unseated state in which there is a divergent gap between the forward edge and the lip of the combustor. The annular feather seal is wider than the divergent gap to maintain sealing when in the vane is in the unseated state.

In an embodiment of the foregoing embodiment, the first side of the airfoil section is a suction side, the second side of the airfoil section is a pressure side, the second circumferential side of the platform is located to the second side of the airfoil section, and the divergent gap diverges toward the second circumferential side.

In a further embodiment of any of the foregoing embodiments, the seal slot is radially thicker than the annular feather seal.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example gas turbine engine.
Figure 2 illustrates portions of the combustor and turbine section of the engine of Figure 1.
Figure 3 illustrates a radial view of turbine vanes in the turbine section.
Figure 4 illustrates a magnified view of the interface between the combustor and the turbine vanes.
Figure 5 illustrates a sectioned view of the interface between the combustor and the turbine vanes.
Figure 6 illustrates a scalloped lip of the combustor.
Figure 7 illustrates an isolated view of a feather seal split ring.

### DETAILED DESCRIPTION

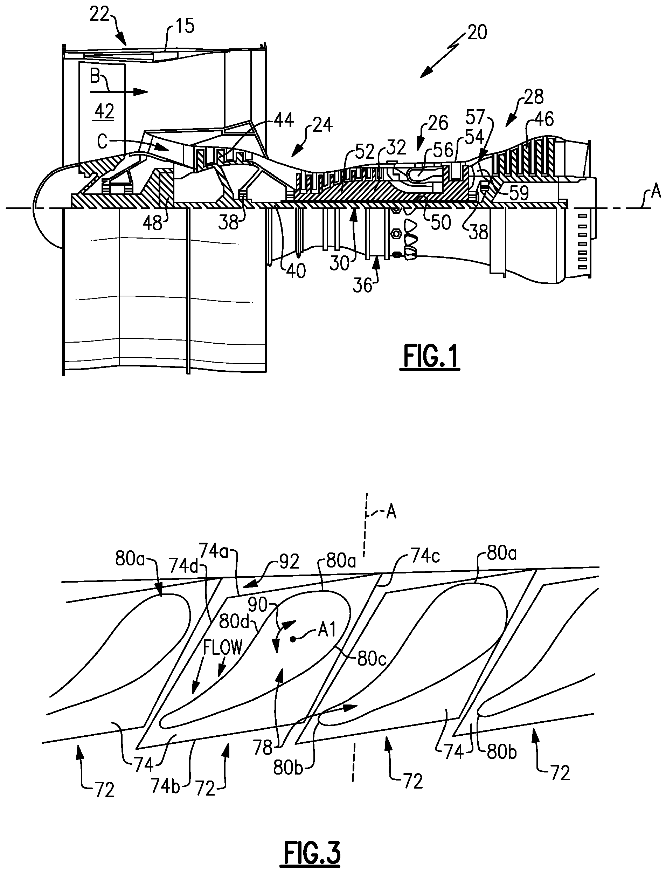

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^0.5 (where °R = K x 9/5). The "Low corrected fan tip speed" as disclosed herein according to one non-limiting embodiment is less than about 1150 ft / second (350.5 meters/second).

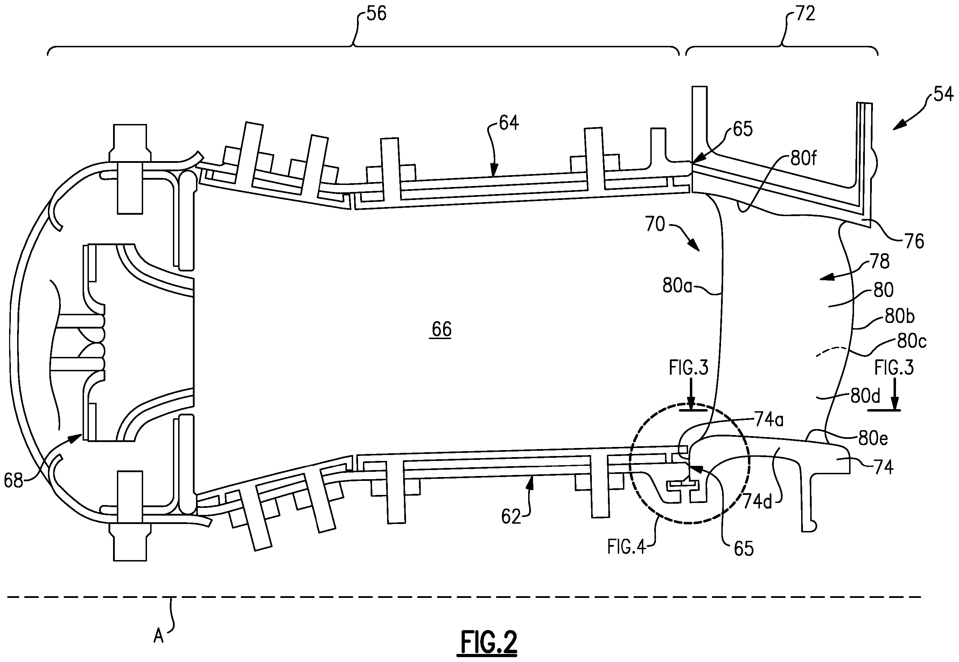

Figure 2 illustrates a view taken through selected portions of the combustor 56 and high pressure turbine 54 of the engine 20. In this example, the combustor 56 is an annular combustor that extends around the engine central axis A, although it is contemplated that the examples herein are also applicable to can type combustors. The combustor 56 includes a radially inner shell or combustor wall 62 and a radially outer shell or combustor wall 64. The walls 62/64 define an annular combustor chamber 66 there between. The combustor 56 includes one or more injectors 68 at a forward end of the combustor 56, and an exit region 70 at the aft end of the combustor 56. The combustor walls 62/64 each include a lip 65 at the axially trailing end thereof.

The high pressure turbine 54 includes a circumferential row of turbine vanes 72 adjacent the exit region 70. Each vane 72 includes an inner or first platform 74, an outer or second platform 76, and an airfoil section 78 that spans in a radial direction between the first and second platforms 74/76. A radial view of a portion of the row of turbine vanes 72 is also shown in Figure 3. Terms such as "radially," "axially," "circumferentially," or variations thereof are used herein to designate directionality with respect to the engine central axis A.

The airfoil section 78 includes an airfoil outer wall 80 that delimits the profile of the airfoil section 78. The outer wall 80 defines a leading end 80a, a trailing end 80b, and first and second sides 80c/80d that join the leading and trailing ends 80a/80b. The first and second sides 80c/80d span in the radial direction between first and second ends 80e/80f that are attached, respectively, to the first and second platforms 74/76. In this example, the first side 80c is a suction side and the second side 80d is a pressure side.

The first platform 74 (Figure 3) defines forward and trailing edges 74a/74b and first and second circumferential side edges 74c/74d that join the forward and trailing edges 74a/74b. Generally, the first and second circumferential side edges 74c/74d mate with or bear against the respective second and first circumferential side edges 74c/74d of the adjacent vanes 72. Likewise, the second platform 76 defines forward and trailing edges and first and second circumferential side edges that join the forward and trailing edges. The first and second circumferential side edges also mate with or bear against the respective second and first circumferential side edges of the adjacent vanes 72. The examples herein below may be directed to the first platform 74. However, it is to be understood that the examples are also applicable to the second platform 76.

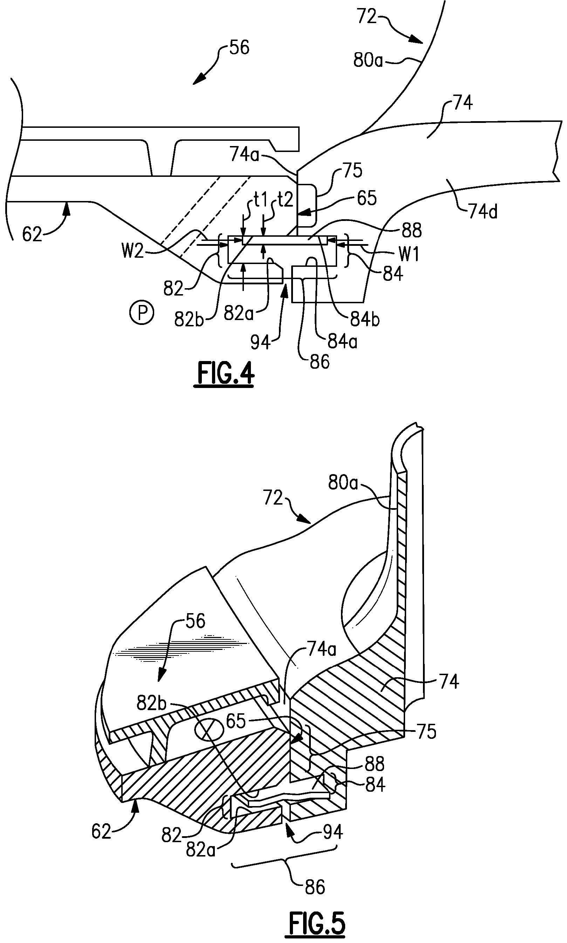

Figure 4 illustrates a magnified view of the exit region 70 of the combustor 56 at the forward edge 74a of the vane 72, and Figure 5 illustrates a sectioned view of the same area. The forward edge 74a is adjacent the lip 65 of the combustor wall 62. In Figures 4 and 5, the vane 72 is shown in a seated position. In the seated position, a bearing surface 75 on the forward edge 74a of the platform 74 abuts the lip 65 of the combustor wall 62. The abutment between the lip 65 and the bearing surface 75 provides a primary seal across the interface between the platform 74 and the combustor wall 62 to prevent the escape of combustion gases from the core flow path.

The lip 65 defines a first annular slot 82 and the forward edges 74a of the platforms 74 of the vanes 72 collectively define a second annular slot 84. The first and second annular slots 82/84 together define an annular seal slot 86. An annular feather seal 88 is entrapped in the annular seal slot 86 between the combustor wall 62 and the platform 74. As will be described further below, the platform 74 can move axially away from the lip 65, thereby opening a gap through which combustion gases can escape. In this regard, the annular feather seal 88 serves as a secondary seal across the interface between the platform 74 and the combustor wall 62 to prevent the escape of combustion gases from the core gaspath.

As shown in Figure 3 and represented at 90, the vanes 72 have rotational play about their radial axes A1 under aerodynamic loads. For instance, although the vanes 72 are generally statically mounted, due to tolerances in manufacturing and assembly, the vanes 72 can shift somewhat from their proper design positions in which the bearing surfaces 75 are seated against the lip 65. Flow of combustion gases from the combustor 56 impinges against the second side 80d of the airfoil section 78, particularly toward the trailing end 80b, thereby generating a rotational force about the axis A1. In combination with the play in the position of the vanes 72, the rotational forces can cause the vanes 72 to rotate from their design positions. The rotation tends to shift one side of the vanes 72 in an axially aft direction, unseating the bearing surface 75 from the lip 65. In the unseated position there is thus a divergent gap 92 across the interface between the platform 74 and the combustor wall 62 through which combustion gases can escape. That is, one corner of the platform 74 at the forward edge 74a remains in contact with, or at least in close proximity to, the lip 65, while the opposite corner of the platform 74 at the forward edge 74a shifts axially aftwards.

In particular, the divergent gap 92 presents an unusual sealing challenge because the vanes 72 may dynamically move between the seated and unseated positions during engine operation and the forward edges 74a of the platforms 74 and the lip 65 are non-parallel when in the unseated position. Thus, seals that cannot accommodate dynamic movement or seals that rely on parallel sides may not provide a desired level of sealing. In this regard, the annular feather seal 88 is able to address both the dynamic movement and the non-parallel nature of the divergent gap 92.

For example, the configuration of the feather seal 88 and the seal slot 86 facilitate dynamic sealing of the divergent gap 92. In one example, the seal slot 86 defines a slot radial thickness t1 and the feather seal 88 defines a seal radial thickness t2, where t2 is less than t1. The seal slot 86 also defines a slot axial width w1 and the feather seal 88 defines a seal axial width w2, where w2 is less than w1. That is, the feather seal 88 is smaller in cross-section than the seal slot 86. This permits the feather seal 88 to shift dynamically within the seal slot 86 to accommodate shifts in the position of the vanes 72. Additionally, the seal axial width w2 is larger (i.e., wider) than the divergent gap 92, to maintain sealing when the vane 72 is in the unseated state. For instance, the play in the vanes 72 may be determined or estimated during engine design to determine or estimate the maximum size of the divergent gap 92. The seal axial width w2 is then selected to be larger than the maximum size in order to ensure sealing entirely along the divergent gap 92.

The first and second annular slots 82/84 that define the annular seal slot 86 are also configured to bias the feather seal 88 to a sealed position. For example, the first slot 82 is defined by radially inner and outer walls 82a/82b of the combustor wall 62, and the second slot 84 is defined by radially inner and outer walls 84a/84b of the platform 74. The outer wall 82b and the outer wall 84b abut (at bearing surface 75 and lip 65). The inner wall 82a and the inner wall 84a are axially spaced apart such that there is a gap 94 there between. There is a high pressure region "P" (Figure 4) radially inwards of the combustor wall 62 and the platform 74. The pressure in the high pressure region is greater than the pressure in the core gaspath. The high pressure communicates through the gap 94 into the seal slot 86 to bias the feather seal 88 radially outwards, against the outer walls 82b/84b, thereby maintaining the feather seal 88 in a sealed position.

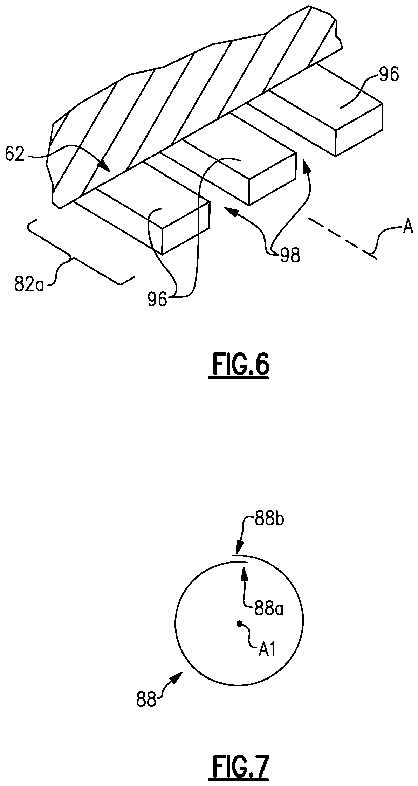

To further permit communication of the high pressure in addition to the gap 94, and also reduce weight, at least one of the inner wall 82a or the inner wall 84a is scalloped. Figure 6 shows an example of the inner wall 82a, although it is to be understood that the example is also applicable to the inner wall 84a. As shown, the inner wall 82a includes tabs 96 and axial slots 98 that are circumferentially between the tabs 96 to provide a scalloped configuration. The axial slots 98 provide additional area for communication of the high pressure into the seal slot 86 to bias the feather seal 88 radially outwards.

The feather seal 88 is also configured to dynamically adapt in diametric size to maintain sealing. Figure 7 shows an isolated axial view of the feather seal 88. The feather seal is a split ring. The split ring has first and second ends 88a/88b that are overlapping. The ends 88a/88b are thus free to move relative to one another. The split ring can thereby readily expand and contract in diameter. For instance, the split ring may thermally expand and contract with thermal transients in the engine 20. If constrained, as an endless ring, such expansion or contraction may cause a seal to unseat from its sealing position. However, because the ends 88a/88b can move, the feather seal 88 can readily expand and contract and thereby maintain a sealing position against the radially outer walls 82b/84b in the seal slot 86 under various thermal conditions.

The preceding description is exemplary rather than limiting in nature. Variations and modifications to the disclosed examples may become apparent to those skilled in the art that do not necessarily depart from the invention. The invention can only be determined by studying the following claims.

## Claims

1. A gas turbine engine (20) comprising:
a combustor (56) disposed about an engine central axis (A) and including a combustor wall (62, 64) and a combustion chamber (66), the combustor wall (62, 64) having a lip (65) at an exit region (70) of the combustion chamber (66);
a circumferential row of vanes (72) adj acent the exit region (70), each said vane (72) including a platform (74, 76) and an airfoil section (78) extending from the platform (74, 76), the platform (74, 76) defining forward and trailing edges (74a, 74b) and first and second circumferential side edges (74c, 74d) joining the forward and trailing edges (74a, 74b), the forward edge (74a) being adj acent the lip (65) of the combustor wall (62, 64), wherein the lip (65) defines a first annular slot (82) and the forward edges (74a) collectively define a second annular slot (84), the first and second annular slots (82, 84) together defining an annular seal slot (86) and the first annular slot (82) is defined by radially inner and outer walls (82a, 82b) of the combustor wall (62, 64) and the second annular slot (84) is defined by radially inner and outer walls (84a, 84b) of the platform (74, 76),
**characterised in that:**
an annular feather seal (88) is entrapped in the annular seal slot (86) between the combustor wall (62, 64) and the platform (74, 76);
the annular feather seal (88) is a split ring, the split ring having overlapping ends (88a, 88b); and
at least one of the radially inner wall (82a) of the first annular slot (82) or the radially inner wall (84a) of the second annular slot (84) is scalloped.

2. The gas turbine engine as recited in claim 1, wherein the platform (74, 76) is radially inwards of the airfoil section (78).

3. The gas turbine engine as recited in claim 1 or 2, wherein the lip (65) of the combustor (56) abuts the forward edge (74a) of the platform (74, 76).

4. The gas turbine engine as recited in any preceding claim, wherein the radially outer wall (82b) of the first annular slot (82) and the radially outer wall (84b) of the second annular slot (84) abut, and the radially inner wall (82a) of the first annular slot (82) and the radially inner wall (84a) of the second annular slot (84) are axially spaced apart such that there is a gap (94) therebetween.

5. The gas turbine engine as recited in any preceding claim, wherein the airfoil section (78) of each vane (72) extends along a radial axis from the platform (74, 76), each vane (72) having rotational play about the respective radial axis under aerodynamic loads such that each vane (72) moves relative to the combustor (56) between a seated state in which the forward edge (74a) abuts the lip (65) of the combustor wall (62, 64) and an unseated state in which there is a divergent gap (92) between the forward edge (74a) and the lip (65) of the combustor (56), and the annular feather seal (88) is wider than the divergent gap (92) to maintain sealing when in the vane (72) is in the unseated state.

6. The gas turbine engine as recited in claim 5, wherein a first side (80c) of the airfoil section (78) is a suction side, a second side (80d) of the airfoil section (78) is a pressure side, the second circumferential side edge (74d) of the platform (74, 76) is located to the second side (80d) of the airfoil section (78), and the divergent gap (92) diverges toward the second circumferential side edge (76d).

7. The gas turbine engine as recited in any preceding claim, wherein the seal slot (86) is radially thicker than the annular feather seal (88).

## Patentansprüche

1. Gasturbinentriebwerk (20), umfassend:
eine Brennkammer (56), die um eine Mittelachse (A) des Triebwerks angeordnet ist und eine Brennkammerwand (62, 64) und
eine Verbrennungskammer (66) beinhaltet, wobei die Brennkammerwand (62, 64) eine Lippe (65) an einem Austrittsbereich (70) der Verbrennungskammer (66) aufweist;
eine Umfangsreihe von Leitschaufeln (72) neben dem Austrittsbereich (70), wobei jede Leitschaufel (72) eine Plattform (74, 76) und einen sich von der Plattform (74, 76) erstreckenden Schaufelblattabschnitt (78) beinhaltet, wobei die Plattform (74, 76) eine Vorder- und Hinterkante (74a, 74b) und eine erste und zweite Umfangsseitenkante (74c, 74d) definiert, die die Vorder- und Hinterkante (74a, 74b) verbinden, wobei sich die Vorderkante (74a) neben der Lippe (65) der Brennkammerwand (62, 64) befindet, wobei die Lippe (65) einen ersten ringförmigen Schlitz (82) definiert und die Vorderkanten (74a) gemeinsam einen zweiten ringförmigen Schlitz (84) definieren,
wobei der erste und zweite ringförmige Schlitz (82, 84) gemeinsam einen ringförmigen Dichtungsschlitz (86) definieren und der erste ringförmige Schlitz (82) durch eine radial innere und äußere Wand (82a, 82b) der Brennkammerwand definiert ist (62, 64) und der zweite ringförmige Schlitz (84) durch eine radial innere und äußere Wand (84a, 84b) der Plattform (74, 76) definiert ist,
**dadurch gekennzeichnet, dass:**
eine ringförmige Federdichtung (88) in dem ringförmigen Dichtungsschlitz (86) zwischen der Brennkammerwand (62, 64) und der Plattform (74, 76) eingeschlossen ist;
die ringförmige Federdichtung (88) ein Spaltring ist, wobei der Spaltring überlappende Enden (88a, 88b) aufweist; und
mindestens eine von der radial inneren Wand (82a) des ersten ringförmigen Schlitzes (82) oder der radial inneren Wand (84a) des zweiten ringförmigen Schlitzes (84) gezahnt ist.

2. Gasturbinentriebwerk nach Anspruch 1, wobei sich die Plattform (74, 76) radial innen zum Schaufelblattabschnitt (78) befindet.

3. Gasturbinentriebwerk nach Anspruch 1 oder 2, wobei die Lippe (65) der Brennkammer (56) an der Vorderkante (74a) der Plattform (74, 76) anliegt.

4. Gasturbinentriebwerk nach einem der vorhergehenden Ansprüche, wobei die radial äußere Wand (82b) des ersten ringförmigen Schlitzes (82) und die radial äußere Wand (84b) des zweiten ringförmigen Schlitzes (84) aneinander anliegen und die radial innere Wand (82a) des ersten ringförmigen Schlitzes (82) und die radial innere Wand (84a) des zweiten ringförmigen Schlitzes (84) axial derart beabstandet sind, dass dazwischen ein Spalt (94) besteht.

5. Gasturbinentriebwerk nach einem der vorhergehenden Ansprüche, wobei sich der Schaufelblattabschnitt (78) jeder Leitschaufel (72) entlang einer radialen Achse von der Plattform (74, 76) erstreckt, wobei jede Leitschaufel (72) unter aerodynamischen Belastungen ein Drehspiel um die jeweilige radiale Achse aufweist, sodass sich jede Leitschaufel (72) relativ zu der Brennkammer (56) zwischen einem eingepassten Zustand, in dem die Vorderkante (74a) an der Lippe (65) der Brennkammerwand (62, 64) anliegt, und einem nicht eingepassten Zustand, in dem ein divergierender Spalt (92) zwischen der Vorderkante (74a) und der Lippe (65) der Brennkammer (56) besteht, bewegt und die ringförmige Federdichtung (88) breiter ist als der divergierende Spalt (92), um die Abdichtung aufrechtzuerhalten, wenn sich die Leitschaufel (72) in dem nicht eingepassten Zustand befindet.

6. Gasturbinentriebwerk nach Anspruch 5, wobei eine erste Seite (80c) des Schaufelblattabschnitts (78) eine Saugseite ist, eine zweite Seite (80d) des Schaufelblattabschnitts (78) eine Druckseite ist, sich die zweite Umfangsseitenkante (74d) der Plattform (74, 76) an der zweiten Seite (80d) des Schaufelblattabschnitts (78) befindet und der divergierende Spalt (92) in Richtung der zweiten Umfangsseitenkante (76d) divergiert.

7. Gasturbinentriebwerk nach einem der vorhergehenden Ansprüche, wobei der Dichtungsschlitz (86) radial dicker ist als die ringförmige Federdichtung (88).

## Revendications

1. Moteur à turbine à gaz (20) comprenant :
un dispositif de combustion (56) disposé autour d'un axe central de moteur (A) et comportant une paroi de dispositif de combustion (62, 64) et une chambre de combustion (66), la paroi de dispositif de combustion (62, 64) comportant une lèvre (65) au niveau d'une région de sortie (70) de la chambre de combustion (66) ;
une rangée circonférentielle d'aubes (72) adjacente à la région de sortie (70), chacune de ladite aube (72) comportant une plate-forme (74, 76) et une section de profil aérodynamique (78) se prolongeant à partir de la plate-forme (74, 76), la plate-forme (74, 76) définissant des bords avant et arrière (74a, 74b) et le premier bord et le second bord latéraux circonférentiels (74c, 74d) joignant les bords avant et arrière (74a, 74b), le bord avant (74a) étant adjacent à la lèvre (65) de la paroi de chambre de combustion (62, 64), dans laquelle la lèvre (65) définit une première fente annulaire (82) et les bords avant (74a) définissent collectivement une seconde fente annulaire (84), la première fente et la seconde fente annulaires (82, 84) définissant ensemble une fente d'étanchéité annulaire (86) et la première fente annulaire (82) est définie par des parois radialement intérieure et extérieure (82a, 82b) de la paroi de chambre de combustion (62, 64) et la seconde fente annulaire (84) est définie par des parois radialement intérieure et extérieure (84a, 84b) de la plate-forme (74, 76),
**caractérisé en ce que :**
un joint annulaire à plume (88) est emprisonné dans la fente de joint annulaire (86) entre la paroi de la chambre de combustion (62, 64) et la plate-forme (74, 76) ;
le joint annulaire à plume (88) est un anneau fendu, l'anneau fendu ayant des extrémités qui se chevauchent (88a, 88b) ; et au moins l'une des parois radialement intérieure (82a) de la première fente annulaire (82) ou de la paroi radialement intérieure (84a) de la seconde fente annulaire (84) est festonnée.

2. Moteur à turbine à gaz selon la revendication 1, dans lequel la plate-forme (74, 76) est radialement à l'intérieur de la section de profil aérodynamique (78).

3. Moteur à turbine à gaz selon la revendication 1 ou 2, dans lequel la lèvre (65) de la chambre de combustion (56) vient en butée contre le bord avant (74a) de la plate-forme (74, 76).

4. Moteur à turbine à gaz selon une quelconque revendication précédente, dans lequel la paroi radialement externe (82b) de la première fente annulaire (82) et la paroi radialement externe (84b) de la seconde fente annulaire (84) sont en butée, et la paroi radialement interne (82a) de la première fente annulaire (82) et la paroi radialement interne (84a) de la seconde fente annulaire (84) sont espacées axialement de telle sorte qu'il existe un espace (94) entre elles.

5. Moteur à turbine à gaz selon une quelconque revendication précédente, dans lequel la section de profil aérodynamique (78) de chaque aube (72) se prolonge le long d'un axe radial à partir de la plate-forme (74, 76), chaque aube (72) ayant un jeu de rotation autour de l'axe radial respectif sous des charges aérodynamiques de telle sorte que chaque aube (72) se déplace par rapport à la chambre de combustion (56) entre un état assis dans lequel le bord avant (74a) vient en butée contre la lèvre (65) de la paroi de chambre de combustion (62, 64) et un état non assis dans lequel il existe un espace divergent (92) entre le bord avant (74a) et la lèvre (65) de chambre de combustion (56), et le joint annulaire en plumes (88) est plus large que l'espace divergent (92) pour maintenir l'étanchéité lorsque l'aube (72) est dans l'état non assis.

6. Moteur à turbine à gaz selon la revendication 5, dans lequel un premier côté (80c) de la section de profil aérodynamique (78) est un côté d'aspiration, un second côté (80d) de la section de profil aérodynamique (78) est un côté de pression, le second bord latéral circonférentiel (74d) de la plate-forme (74, 76) est situé sur le second côté (80d) de la section de profil aérodynamique (78), et l'espace divergent (92) diverge vers le second bord latéral circonférentiel (76d).

7. Moteur à turbine à gaz selon une quelconque revendication précédente, dans lequel la fente d'étanchéité (86) est radialement plus épaisse que le joint annulaire à plume (88).
